# EUROPÄISCHE PATENTSCHRIFT

(11) **EP 2 505 428 B1**
(45) Veröffentlichungstag und Bekanntmachung des Hinweises auf die Patenterteilung: **25.05.2016**
(21) Anmeldenummer: 12160366.6
(22) Anmeldetag: 20.03.2012
(51) Int. Cl.: B60N 2/68

(54) **Gurtbefestigung am hinteren Hauptrohr der Rückenlehne, idealerweise am hinteren untenliegenden Fuß**
Belt fixture at the rear main tube of a backrest, ideally at the rear bottom foot
Fixation de ceinture sur le tube principal arrière du dossier, dans l'idéal sur le pied inférieur arrière

(30) Priorität: 28.03.2011 DE 102011015347
(43) Veröffentlichungstag der Anmeldung: 03.10.2012
(73) Patentinhaber: GRAMMER AG, 92224 Amberg (DE)
(72) Erfinder: Übelacker, Roland, 92536 Pfreimd (DE); Deml, Johann, 92554 Thanstein (DE); Schustjew, Sergej, 92237 Sulzbach-Rosenberg (DE)
(74) Vertreter: Hannke, Christian

(56) Entgegenhaltungen:
- DE-A1- 3 136 651
- DE-A1- 19 741 602
- US-A1- 2002 079 734

## Beschreibung

Die Erfindung betrifft einerseits einen Fahrzeugsitz mit einem Sitzteil, mit einer Rückenlehne, mit einem Gurtrückhaltesystem und mit einer Tragstruktur zum Tragen des Sitzteils sowie der Rückenlehne, bei welchem das Gurtrückhaltesystem eine Gurtumlenkung und ein Gurtschloss umfasst und bei welchem die Gurtumlenkung in einem oberen Eckbereich der Rückenlehne und das Gurtschloss in einem Sitzbereich des Sitzteils platziert ist.

Gattungsgemäße Fahrzeugsitze sind aus dem Stand der Technik hinreichend bekannt. Speziell in Kraftfahrzeugen oder Nutzkraftfahrzeugen, wie Traktoren oder dergleichen, sind Fahrzeugsitze robuster konstruiert, um härteren Einsatzbedingungen dieser Fahrzeuge gerecht werden zu können. Generell ist jedoch auch bei derartigen Fahrzeugen insgesamt eine Gewichtsreduzierung erwünscht.
DE 3136651 A1 zeigt einen Fahrzeugsitz mit einem Sitzteil, mit einer Rückenlehne und mit einem Gurtrückhaltesystem, bei welchem das Gurtrückhaltesystem eine Gurtumlenkung und ein Gurtschloss aufweist, wobei die Gurtumlenkung in einem oberen Eckbereich der Rückenlehne und das Gurtschloss in einem Sitzbereich des Sitzteiles platziert ist.

US 2002 0079734 A1 zeigt einen gattungsgemässen Fahrzeugsitz mit einer Gurtumlenkung im oberen Eckbereich.

DE 197 41 602 A1 zeigt wiederum ein Fahrzeug mit einem Tragwerk aus Rohren, die an Knotenstellen zur Ausbildung eines Sitzteiles und Lehnenteiles verbunden sind. Die Rohre sind im Tragwerk zu Dreiecken oder dreiecksähnlichen Gebilden verbunden. Somit können die Rohe überwiegend auf Zug und Druck belastet werden.

Insofern ist es Aufgabe der vorliegenden Erfindung gattungsgemäße Fahrzeugsitze gewichtsreduziert bauen zu können, ohne hierbei komfortrelevante und/oder sicherheitsrelevante Aspekte vernachlässigen zu müssen.

Nach einem ersten Aspekt der Erfindung wird die vorliegende Aufgabe von einem Fahrzeugsitz mit einem Sitzteil, mit einer Rückenlehne, mit einem Gurtrückhaltesystem und mit einer Tragstruktur zum Tragen des Sitzteils sowie der Rückenlehne gelöst, bei welchem das Gurtrückhaltesystem eine Gurtumlenkung und ein Gurtschloss umfasst und bei welchem die Gurtumlenkung in einem oberen Eckbereich der Rückenlehne und das Gurtschloss in einem Sitzbereich des Sitzteils platziert ist, wobei sich der Fahrzeugsitz dadurch auszeichnet, dass die Tragstruktur ein asymmetrisches Gestell mit im Wesentlichen vertikal verlaufenden Hauptkräftestreben aufweist, bei welchem die Hauptkräftestreben oberseitig der Tragstruktur in dem Knotenbereich zusammengeführt und unterseitig der Tragstruktur eine erste der Hauptkräftestreben knotenbereichsseitig als Druckstrebe nach vorne bis zu einem vorderen Tragstrukturfuß, eine zweite der Hauptkräftestreben als Zugstrebe knotenbereichsseitig hinten bis zu einem ersten hinteren Tragstrukturfuß und eine dritte der Hauptkräftestreben als Zug-Druckstrebe hinten bis zu einem weiteren hinteren Tragstrukturfuß geführt angeordnet sind, wobei eine Befestigung des Gurtschlosses im unteren Drittel oder im unteren Viertel der dritten Hauptkräftestrebe angeordnet ist.

Bereits durch diese erfindungsgemäße Führung der drei Hauptkräftestreben kann die Tragstruktur des Fahrzeugsitzes gewichtsmäßig außergewöhnlich leicht bauen, da im Wesentlichen lediglich die vordere der Hauptkräftestreben besonders stabil ausgelegt werden muss, um insbesondere in einem Crashfall auf den Fahrzeugsitz wirkende Kräfte bewältigen zu können.

Vorteilhafter Weise kann aufgrund des erfindungsgemäß ausgestalteten Gestells insbesondere die knotenbereichsseitige hintere Hauptkräftestrebe weniger stabil bauen, so dass sich allein hierdurch bereits eine gute Gewichtsreduzierung am Fahrzeugsitz erzielen lässt.

Darüber hinaus kann auch die dritte Hauptkräftestrebe gegenüber der ersten Hauptkräftestrebe gewichtsreduziert hergestellt werden, da sie ebenso wie die zweite Hauptkräftestrebe insbesondere im Crashfall weniger stark belastet wird als die hier nach vorn geführte Hauptkräftestrebe.

Ist darüber hinaus die Befestigung des Gurtschlosses im unteren Drittel oder im unteren Viertel der dritten Hauptkräftestrebe, insbesondere möglichst nahe an der Unterseite des Traggestells, angeordnet, werden die im Falle eines Crashs auf die Tragstruktur wirkenden Momente vorteilhaft reduziert, da hierdurch ein Hebelweg zwischen der Gurtschlossbefestigung und der Karosseriekomponente, an welcher die Tragstruktur angeordnet ist, stark verkürzt ist. Entsprechend können auch die hieraus resultierenden Momente reduziert werden, wodurch der Fahrzeugsitz nochmals leichter gebaut werden kann.

Betrachtet man speziell eine Gurtrückhaltekraft des Gurtes einer im Fahrzeugsitz angegurteten Person, wirkt diese Gurtrückhaltekraft vorteilhafter Weise erst sehr weit unten und/oder weit hinten an dem Fahrzeugsitz, da die Befestigungsposition des Gurtschlosses und damit die Kräfteübertragung von der Befestigungseinrichtung auf die Tragstruktur entsprechend weit unten bzw. weit hinten an der Tragstruktur erfolgt.

Insofern wird die Gurtrückhaltekraft auch weiter unten und/oder weiter hinten im Fahrzeugsitz in ihre Kräftekomponenten aufgeteilt, so dass hieraus resultierende und auf die Tragstruktur wirkende Momente reduziert werden können, wodurch eine weitere Gewichtsreduzierung am Fahrzeugsitz erreichbar ist.

Ideal ist die Befestigung des Gurtschlosses demnach am unteren Ende der Tragstruktur, jedoch gelingt dies meist nicht wirklich, da dieses untere Ende im eingebauten Zustand des Fahrzeugsitzes meist umbaut und daher oftmals nicht frei zugänglich für eine entsprechende Befestigungseinrichtung ist.

Es versteht sich, dass die Tragstruktur weitere Strukturstreben umfassen kann, die jedoch alle weniger massiv bzw. hochwertig ausgelegt werden müssen als die hier beschriebenen Hauptkräftestreben.

Der Begriff "Tragstruktur" beschreibt vorliegend ein Gestell, welches insbesondere das Sitzteil und die Rückenlehne trägt, und welches im Sinne der Erfindung an einer Karosseriekomponente eines Fahrzeugs befestigbar ist, so dass mittels der Tragstruktur auf den Fahrzeugsitz einwirkende Kräfte in die Karosseriekomponente einleitbar sind.

Die Begriffe "oberseitig" und unterseitig" beschreiben im Sinne der Erfindung Bereiche des Fahrzeugsitzes bzw. der diesbezüglichen Tragstruktur.

Es versteht sich, dass die Befestigung des Gurtschlosses mittels unterschiedlicher Befestigungseinrichtungen realisiert sein kann.

Weist die Befestigungseinrichtung des Gurtschlosses zumindest teilweise die Tragstruktur des Fahrzeugsitzes auf, können auf das Gurtschloss wirkende Kräfte direkt über die eigentliche Tragstruktur des Fahrzeugsitzes in die Karosseriekomponente eingeleitet werden. Insofern werden andere Bauteile oder Bauteilgruppen des Fahrzeugsitzes nicht mehr oder durch diese Gurtschlossrückhaltekräfte belastet, wodurch sie gewichtsoptimiert ausgelegt werden können.

Nach einem nicht beansprüchten Ausführungsbeispiel wird die Aufgabe auch von einem Fahrzeugsitz mit einem Sitzteil, mit einer Rückenlehne und mit einem Gurtrückhaltesystem gelöst, bei welchem das Gurtrückhaltesystem eine Gurtumlenkung und ein Gurtschloss umfasst und bei welchem die Gurtumlenkung in einem oberen Eckbereich der Rückenlehne und das Gurtschloss in einem Sitzbereich des Sitzteils platziert ist, wobei sich der Fahrzeugsitz dadurch auszeichnet, dass die Gurtumlenkung und das Gurtschloss beide an einer gemeinsamen Tragstruktur des Fahrzeugsitzes befestigt sind.

Dadurch, dass sowohl die Gurtumlenkung als auch das Gurtschloss beide an der gemeinsamen Tragstruktur befestigt sind, kann das Gewicht des Fahrzeugsitzes vorteilhafter Weise reduziert werden, da andere Fahrzeugbauteile bzw. diesbezügliche Bauteilgruppen, an welchen die Gurtumlenkung und das Gurtschloss herkömmlicherweise getrennt voneinander befestigt werden, weniger massiv ausgelegt werden müssen. Idealerweise kann auf einzelne derartige Bauteile bzw. Bauteilgruppen zur Gänze verzichtet werden.

Insofern können auf die Gurtumlenkung wirkende Kräfte sowie auf das Gurtschloss wirkende Kräfte direkt über die gemeinsame Tragstruktur des Fahrzeugsitzes in die Karosseriekomponente eingeleitet werden.

Durch eine Verlegung der Gurtumlenkungsbefestigungsposition und der der Gurtschlossbefestigungsposition an die gemeinsame Tragstruktur, können insbesondere durch die Gurtumlenkungskräfte und die Gurtschlosskräfte hervorgerufene und auf den Fahrzeugsitz wirkende Drehmomente verringert werden, so dass vorliegend insbesondere auf eine Materialverstärkung oder das bisher übliche Vorsehen zusätzlicher Verstrebungselemente, wie z.B. Knotenbleche, verzichtet werden kann. Dies führt zwangsläufig zu einer weiteren Gewichtsreduzierung.

Eine außergewöhnlich vorteilhafte Ausführungsvariante sieht vor, dass die Gurtumlenkung an einem ersten Endbereich der dritten Hauptkräftestrebe und die Gurtschlossbefestigung an einem dem ersten Endbereich gegenüberliegen weiteren Endbereich der dritten Hauptkräftestrebe angeordnet sind, wodurch vorteilhafter Weise die gesamte dritte Hauptkräftestrebe in Funktion einer Zugstrebe als Widerlager für die Aufnahme der Gurtrückhaltekräfte zur Verfügung stehen kann. Insofern kann die dritte Hauptkräftestrebe weniger massig ausgestaltet sein und trotzdem den hohen spezifischen Belastungen standhalten.

Ist darüber hinaus die Befestigung des Gurtschlosses bzw. die Befestigungseinrichtung des Gurtschlosses unterhalb des Sitzteils und/oder hinter der Rückenlehne angeordnet, kann die Befestigungsposition der Befestigungseinrichtung einerseits relativ weit unten bzw. andererseits relativ weit hinten am Fahrzeugsitz erfolgen. Hierdurch können an dem Gurtrückhaltesystem auftretende Kräfte vorteilhafter Weise von der Befestigungseinrichtung direkt in die speziell zur Kräfteaufnahme konzipierte Tragstruktur eingeleitet werden, obwohl hierfür eine größere Distanz zwischen dem Gurtschloss und einer Strukturstrebe der Tragstruktur, vorzugsweise der dritten Hauptkräftestrebe, überbrückt werden muss.

Erfolgt die Befestigung des Gurtschlosses an einer Strukturstrebe bzw. an der dritten Hauptkräftestrebe in einem Bereich von weniger als 30 cm, vorzugsweise von weniger als 20 cm von dem unteren Ende der Tragstruktur aus gemessen, können insbesondere die vorstehend beschriebenen Momente besonders vorteilhaft reduziert werden.

Die vorbeschriebenen Vorteile können nochmals verstärkt werden, wenn die Befestigungseinrichtung in einem Fußbereich bzw. an einem Fußteil der Tragstruktur angeordnet ist.

Hinsichtlich einer weiteren bevorzugten Ausgestaltung der Erfindung ist es vorteilhaft, wenn die erste Hauptkräftestrebe, insbesondere oberhalb des Sitzteils, bis vor die Rückenlehne reichend angeordnet ist und seitlich an oder neben dem Sitzteil angeordnet ist.

Hierdurch ist es möglich, insbesondere Hauptkräfte aufnehmende und damit besonders relevante Bereiche der Tragstruktur sehr weit in den vorderen Fahrzeugsitzbereich hinein zu erstrecken, wodurch eine kräfteoptimierte Abstützung des Fahrzeugsitzes gegenüber der Karosseriekomponente erzielt werden kann.

Kumulativ ist es vorteilhaft, wenn die Tragstruktur Hauptkräftestreben aufweist, bei welchem wenigstens eine der Hauptkräftestreben seitlich an oder neben dem Sitzteil angeordnet ist.

Beide der zuletzt genannten Merkmalskombinationen sind insbesondere auf der Seite einer Gurtaufhängung vorteilhaft, da auf dieser Gurtaufhängungsseite Rückhaltekräfte sehr weit oben in die Tragstruktur des vorliegenden Fahrzeugsitzes eingeleitet werden.

Um auch hinsichtlich einer sehr hohen Belastung besonders gut gegen ein unkontrolliertes Ausknicken der Hauptkräftestreben geschützt zu sein, ist es von enormem Vorteil, wenn insbesondere die erste Hauptkräftestrebe gebogen und in Sitzrichtung bauchig ausgestaltet ist.

Mit einer gebogenen Hauptkräftestrebe kann vorteilhafter Weise eine definierte Sollknickstelle erzeugt werden.

Insbesondere kann durch ein gezieltes Abspannen gemäß dem Bogenprinzip, die Gefahr eines unkontrollierten Ausknickens in Querrichtung, also quer zur Sitzrichtung einer Person, reduziert werden.

Demzufolge ist es darüber hinaus auch vorteilhaft, wenn die zweite Hauptkräftestrebe in Sitzrichtung bauchig ausgestaltet ist.

Vorteilhafter Weise ist die zweite Hauptkräftestrebe hinter dem Sitzteil angeordnet, wodurch sie speziell vertikal auf den Fahrzeugsitz wirkende Kräfte gut aufnehmen kann.

Die Tragstruktur kann sich vorliegend weiträumig an einem Untergrund abstützen, wenn die dritte Hauptkräftestrebe in Sitzrichtung gesehen quer hinter dem Sitzteil angeordnet ist, wodurch sie nicht nur vertikal auf den Fahrzeugsitz wirkende Kräfte sondern konstruktiv einfach auch speziell die Gurtrückhaltekräfte gut aufnehmen kann.

Auch kann der vorliegende Fahrzeugsitz durch das erfindungsgemäße Gestell seitlich vorteilhaft abgestützt werden. Somit lässt sich mittels des vorliegenden asymmetrischen Gestells ein vorteilhaftes Dreibein-Gestell an einem Fahrzeugsitz realisieren, so dass auf eine weitere nach vorne geführte Hauptkräftestrebe verzichtet werden kann.

Beispielsweise wäre diese weitere nach vorne geführte Hauptkräftestrebe ausgehend vom oberseitigen Knotenbereich auch nicht zu realisieren, da zwischen dem Knotenbereich und einem gegenüberliegenden vorderen weiteren Tragstrukturfuß des Fahrzeugsitzes das Sitzteil mit dem Sitzbereich angeordnet ist.

Eine bevorzugte Ausführungsvariante sieht des Weiteren vor, dass die dritte Hauptkräftestrebe fußbereichsseitig an einer Dreiecks-Anordnung aus weiteren Tragstrukturstreben abgestützt angeordnet ist. Mittels dieser Dreiecks-Anordnung kann eine erste wichtige weitere Tragstrukturstrebenverteilung an dem asymmetrischen Gestell erzielt werden.

Die Tragstruktur kann nochmals kompakter bauen, wenn eine rückseitige Vertikalstrebe der Dreiecks-Anordnung sich von dem weiteren hinteren Tragstrukturfuß bis zu dem Knotenbereich erstreckt und dort insbesondere in die zweite Hauptkräftestrebe übergeht.

Um die Tragstruktur darüber hinaus nochmals gewichtsreduzierter ausgestalten zu können, ist es auch vorteilhaft, wenn eine vorderseitige Vertikalstrebe der Dreiecks-Anordnung von dem weiteren hinteren Tragstrukturfuß hochwärts nach vorne ausgerichtet angeordnet ist und insbesondere eine Horizontalstrebe der Dreiecks-Anordnung trägt.

Kumulativ ist es vorteilhaft, wenn eine Horizontalstrebe der Dreiecks-Anordnung sich von einer rückseitigen Vertikalstrebe der Dreiecks-Anordnung bis zu einem weiteren vorderen Tragstrukturfuß der Tragstruktur erstreckt, wodurch eine Stabilisierung der Tragstruktur verbessert werden kann.

Insbesondere kann sich eine vordere Abstützeinrichtung des Sitzteils neben einer Abstützung auf der ersten Hauptkräftestrebe zusätzlich auf diese Horizontalstrebe abstützen.

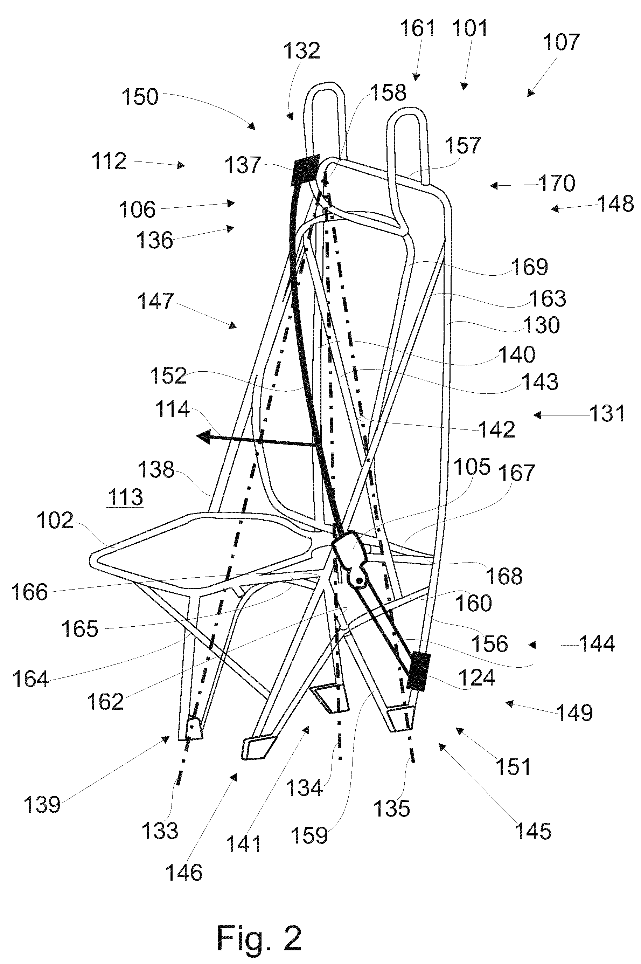

Weitere vorteilhafte Tragstrukturstrebenverläufe werden insbesondere hinsichtlich des in der Figur 2 gezeigten Ausführungsbeispiels beschrieben.

Bereits mittels der drei hier erläuterten Hauptkräftestreben kann in die Tragstruktur eine vorteilhafte Hauptkräfte-Leiteinrichtung implementiert werden. Insofern sieht eine bevorzugte Ausführungsvariante auch vor, dass sowohl die Gurtumlenkung als auch das Gurtschloss an einer Hauptkräfte-Leiteinrichtung der Tragstruktur befestigt sind.

Mit dem Begriff "Hauptkräfte-Leiteinrichtung" ist jegliche Einrichtung erfasst, mittels welcher auf den Fahrzeugsitz wirkende Kräfte in die Karosseriekomponente eines Fahrzeugs eingeleitet werden können.

Es versteht sich, dass die Hauptkräfte-Leiteinrichtung sowohl mittels waagerecht oder senkrecht verlaufender als auch mittels dazwischen orientierter Strukturstreben aufgebaut sein kann, solange die vorgesehenen Strukturstreben im wesentlich vertikal verlaufende Hauptkräftewirklinien bezüglich der Tragstruktur realisierbar machen.

Eine derart konzipierte Tragstruktur erlaubt es darüber hinaus, dass das vorgesehene Sitzteil und die vorgesehene Rückenlehne im Wesentlichen nur den Kräfteanforderungen einer in dem vorliegenden Fahrzeugsitz sitzenden Person genügen muss, wodurch sich der Fahrzeugsitz vorteilhafter Weise weiter gewichtsreduziert verwirklichen lässt.

Vorteilhafter Weise können auf die Gurtumlenkung wirkende Kräfte sowie auf das Gurtschloss wirkende Kräfte unmittelbar über die Hauptkräfte-Leiteinrichtung in die Karosseriekomponente eingeleitet werden, so dass die Kräfte vorteilhaft von dem Fahrzeugsitz aufgenommen werden können.

Vorteilhaft ist somit auch eine Hauptkräfte-Leiteinrichtung mit Hauptkräftestreben, an welchen sowohl die Gurtumlenkung als auch das Gurtschloss befestigt sind.

Insbesondere die Hauptkräftestreben eignen sich besonders gut, die Gurtumlenkungskräfte und die Gurtschlosskräfte aufzunehmen. Insofern ist es vorteilhaft, dort die Gurtumlenkung und das Gurtschloss zu befestigen.

Der Begriff "Hauptkräftestreben" beschreibt diejenigen Strukturstreben der Tragstruktur, welche die im Wesentlichen vertikal verlaufenden Hauptkräftewirklinien formulieren.

Darüber hinaus ist eine Hauptkräfte-Leiteinrichtung mit Hauptkräftestreben vorteilhaft, welche oberseitig der Tragstruktur in einem Knotenbereich der Hauptkräfte-Leiteinrichtung zusammenlaufend und unterseitig der Tragstruktur weiter voneinander beabstandet als in dem Knotenbereich angeordnet sind.

Hierdurch kann eine Kräfteeinleitung in die Karosseriekomponente als weniger belastend insbesondere für die Karosseriekomponente ausgestaltet werden, wenn die Hauptkräftestreben an der der Karosseriekomponente zugewandten Seite des Fahrzeugsitzes weiter voneinander beabstandet angeordnet sind als in dem oderseitigen Knotenbereich.

Es ist auch vorteilhaft, wenn der Knotenbereich im oberen Drittel der Tragstruktur bzw. des Fahrzeugsitzes angeordnet ist, insbesondere der Knotenbereich einen Eckbereich der Tragstruktur bzw. des Fahrzeugsitzes umfasst. Hierdurch kann die Tragstruktur dort möglichst schlank bauen, wodurch eine weitere Gewichtsreduzierung erreicht werden kann.

Vorteilhafter Weise umfasst der Knotenbereich eine Halteeinrichtung für eine Gurtaufhängung.

Dadurch, dass der Knotenbereich an einer Spitze der Hauptkräfte-Leiteinrichtung angeordnet ist, in welcher wenigstens zwei, vorzugsweise drei, Hauptkräftestreben zusammenlaufen, baut die Tragstruktur im Knotenbereich außerordentlich stabil, so dass im Knotenbereich speziell Gurtrückhaltekräfte von der Tragstruktur außergewöhnlich gut ertragen werden können.

Kumulativ ist es vorteilhaft, wenn die Tragstruktur eine Hauptkräfte-Leiteinrichtung mit einem asymmetrischen Gestell umfasst, in welchem im Wesentlichen vertikal verlaufenden Hauptkräftewirklinien oberseitig der Tragstruktur näher zusammengeführt angeordnet sind als unterseitig der Tragstruktur.

Durch ein derart asymmetrisch ausgestaltetes Gestell kann auch die Hauptkräfte-Leiteinrichtung besonders gut bedarfsgerecht hinsichtlich wirkender Kräfte konstruiert werden.

Es versteht sich, dass das asymmetrische Gestell bzw. die Hauptkräfte-Leiteinrichtung physikalisch in verschiedenen Bauweisen realisiert werden kann. Konstruktiv außergewöhnlich einfach kann das asymmetrische Gestell bzw. die Hauptkräfte-Leiteinrichtung mit einem Dreibein-Gestell realisiert werden.

Vorzugsweise laufen durch das Dreibein-Gestell definierte Strukturstreben des asymmetrischen Gestells bzw. der Hauptkräfte-Leiteinrichtung im Knotenbereich der Tragstruktur zusammen.

Insofern ist leicht erkennbar, dass mittels des Dreibein-Gestells baulich einfach die im Wesentlichen vertikal verlaufenden Hauptkräftewirklinien oberseitig der Tragstruktur zusammenlaufend und unterseitig der Tragstruktur auseinanderlaufend orientiert werden können.

Des Weiteren ist es vorteilhaft, wenn insbesondere die Hauptkräfte-Leiteinrichtung ein Gestell mit Hauptkräftestreben aufweist, bei welchem wenigstens eine der Hauptkräftestreben, insbesondere oberhalb des Sitzteils, bis vor die Rückenlehne reichend angeordnet ist.

Hierdurch ist es möglich, insbesondere Hauptkräfte aufnehmende und damit besonders relevante Bereiche der Tragstruktur bzw. der Hauptkräfte-Leiteinrichtung sehr weit in den vorderen Fahrzeugsitzbereich hinein zu verlegen, wodurch eine kräfteoptimierte Abstützung des Fahrzeugsitzes gegenüber der Karosseriekomponente erzielt werden kann.

Kumulativ ist es vorteilhaft, wenn die Hauptkräfte-Leiteinrichtung ein Gestell mit Hauptkräftestreben aufweist, bei welchem wenigstens eine der Hauptkräftestreben seitlich an oder neben dem Sitzteil angeordnet ist.

Beide der zuletzt genannten Merkmalskombinationen sind insbesondere auf der Seite der Gurtaufhängung vorteilhaft, da auf dieser Gurtaufhängungsseite auch Rückhaltekräfte des Gurtes sehr weit oben in die Tragstruktur bzw. in die Hauptkräfte-Leiteinrichtung des vorliegenden Fahrzeugsitzes eingeleitet werden.

An dieser Stelle sei der Vollständigkeit halber noch darauf hingewiesen, dass die Erfindung auch von einem Fahrzeug, von einem Kraftfahrzeug oder von einem Nutzkraftfahrzeug gelöst wird, welches sich durch einen Fahrzeugsitz nach einem der hier beschriebenen Merkmale auszeichnet.

Der erfindungsgemäße Fahrzeugsitz kann insbesondere als Beifahrersitz eines solchen Fahrzeugs realisiert sein, wobei speziell Beifahrersitze von Nutzkraftfahrzeugen meistens ungefedert sind. Daher kann speziell der Beifahrersitz mit der vorliegenden starren Tragstruktur, an welcher die Befestigung des Gurtschlosses möglichst weit unten angreift, vorteilhaft ausgerüstet sein.

Weitere Vorteile, Ziele und Eigenschaften vorliegender Erfindung werden anhand anliegender Zeichnung und nachfolgender Beschreibung erläutert, in welchen beispielhaft Tragstruktur aufweisende Fahrzeugsitze mit Gurtschlössern, welche jeweils mittels einer Befestigungseinrichtung an der Tragstruktur befestigt sind, dargestellt und beschrieben sind. Der Übersichtlichkeit halber können auch wesentliche Merkmale der Erfindung nur jeweils an einem der Ausführungsbeispiele gezeigt und beschrieben sein, obwohl sie auf beide Ausführungsbeispiele zutreffen.

In der Zeichnung zeigen:
- Figur 1: schematisch eine Seitenansicht eines ersten Fahrzeugsitzes mit einer Befestigungseinrichtung eines Gurtschlosses, bei welchem die Befestigungseinrichtung im Fußbereich eines Gestells einer Tragstruktur des Fahrzeugsitzes angeflanscht ist; und
- Figur 2: schematisch eine perspektivische Ansicht eines Beifahrersitzes mit einer Befestigungseinrichtung eines Gurtschlosses, bei welchem die Befestigungseinrichtung ebenfalls im Fußbereich eines Gestells einer Tragstruktur des Fahrzeugsitzes angeflanscht ist.

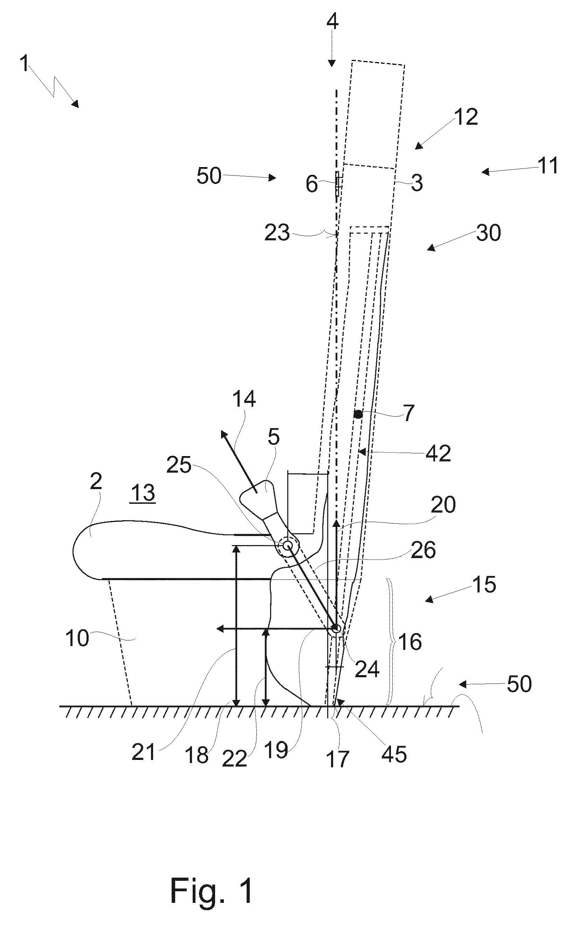

Der in der Figur 1 gezeigte Fahrzeugsitz 1 umfasst ein Sitzteil 2, eine Rückenlehne 3 und ein integriertes Gurtrückhaltesystem 4 - hier illustriert durch ein Gurtschloss 5 und einer Gurtumlenkeinrichtung 6 - zum Zurückhalten einer auf dem Fahrzeugsitz 1 sitzenden Person (hier nicht eingezeichnet).

Der Fahrzeugsitz 1 zeichnet sich des Weiteren durch eine Tragstruktur 7 aus, welche einerseits das Sitzteil 2 und die Rückenlehne 3 trägt.

Andererseits kann der gesamte Fahrzeugsitz 1 mittels der Tragstruktur 7 an einer Karosseriekomponente 8 eines hier nicht näher gezeigten Nutzkraftfahrzeugs befestigt werden, wobei die Karosseriekomponente 8 ein Kabinenboden 9 ist. Unterhalb des Sitzteils 2 ist der Fahrzeugsitz 1 noch mit einem Blechkleid 10 verblendet.

Während die Gurtumlenkung 6 in einem oberen Drittel 11 des Fahrzeugsitzes 1 in einem rechten Eckbereich 12 der Rückenlehne 3 platziert ist, befindet sich das Gurtschloss 5 in einem Sitzbereich 13 des Sitzteils 2.

Erfindungsgemäß ist das Gurtschloss 5 dennoch an der Tragstruktur 7 des Fahrzeugsitzes 1 befestigt, so dass an dem Gurtschloss 5 eventuell wirkende Gurtrückhaltekräfte 14 direkt in die Tragstruktur 7 eingeleitet werden können.

Vorteilhafter Weise können hierdurch andere Fahrzeugsitzbauteile einen weniger massiven und damit leichteren Aufbau besitzen als bisher üblich, wenn das Gurtschloss 5 beispielsweise an dem Sitzteil 2 angebunden wäre.

Die Befestigung 15 des Gurtschlosses 5 erfolgt vorteilhaft in einem Befestigungsbereich 16, der eine Höhe von weniger als 30 cm, vorzugsweise weniger als 20 cm, von einem unteren Ende 17 der Tragstruktur 7 aufweist.

Insofern liegt die Befestigung 15 des Gurtschlosses 5 vorteilhafter Weise in einem Fußbereich 18 der Tragstruktur 7 und damit näher an einer Anbindung an die Karosseriekomponente 8.

Vorteilhafter Weise erfolgt hierbei eine Aufteilung insbesondere der Gurtrückhaltekräfte 14 in horizontale Kräfte 19 und vertikale Kräfte 20 nicht bereits in einer herkömmlichen Höhe 21 des Sitzteils 2 sondern knapp oberhalb des unteren Endes 17 der Tragstruktur 7 in einer neuen vorteilhaften Höhe 22.

Insofern erfolgt die Befestigung 15 des Gurtschlosses 5 unterhalb des Sitzteils 2 und der hinteren Rückenlehne 3.

Aufgrund eines hierdurch resultierenden kürzeren Hebelwegs, welcher im Wesentlichen der neuen Höhe 22 entspricht, zwischen unterem Ende 17 der Tragstruktur 7 und der Befestigung15, reduzieren sich die auf die Tragstruktur 7 ausgeübten Momente entsprechend.

Zudem können die vertikal wirkenden Kräfte 20 in eine Vertikalebene 23 hinein verschoben werden, welche näher an der Gurtumlenkung 6 liegt als bisher möglich.

Um das Gurtschloss 5 einerseits in seiner gut erreichbaren Position im Sitzbereich 13 halten zu können und andererseits eine kräfteoptimierte Befestigung 15 weit unten an der Tragstruktur 7 vernehmen zu können, ist eine Befestigungseinrichtung 24 zwischen dem Gurtschloss 5 und der Tragstruktur 7 angeordnet.

Hierdurch lässt sich eine ansonsten übliche Befestigungsstelle 25, die vorliegend erfindungsgemäß nicht mehr vorhanden ist, in die günstiger platzierte Befestigungseinrichtung 24 an der Tragstruktur 7 hinein verlegen.

Die Befestigungseinrichtung 24 ist in diesem Ausführungsbeispiel ein Teil der Tragstruktur 7, so dass sie die Tragstruktur 7 des Fahrzeugsitzes 1 zumindest teilweise umfasst bzw. bildet.

Die Befestigungseinrichtung 24 umfasst darüber hinaus eine Befestigungslasche 26, mittels welcher das Gurtschloss 5 an der Tragstruktur 7 angelenkt ist.

Die Befestigungseinrichtung 24 kann somit beispielsweise als Strukturstrebe oder als eine Hauptkräftestrebe der Tragstruktur 7 ausgestaltet sein.

Idealerweise erfolgt die Befestigung 15 nicht an irgendeiner der Strukturstreben 30, sondern genau an einer von insgesamt drei Hauptkräftestreben (siehe hierzu Figur 2) der Tragstruktur 7, von welchen der Übersichtlichkeit halber lediglich die dritte Hauptkräftestrebe 42 teilweise eingezeichnet ist.

Vorteilhafter Weise ist die Gurtumlenkung 6 an einem ersten Endbereich 50 der dritten Hauptkräftestrebe 42 und die Gurtschlossbefestigung 15 ist an einem dem ersten Endbereich 50 gegenüberliegen weiteren Endbereich 51 der dritten Hauptkräftestrebe 42 angeordnet, wodurch die dritte Hauptkräftestrebe 42 in Gänze zur Aufnahme von Gurtrückhaltekräften 14 zur Verfügung steht.

Der erste Endbereich 50 befindet sich im Wesentlichen auf Höhe der Gurtumlenkeinrichtung 6 und der weitere Endbereich 51 auf Höhe eines Tragstrukturfußes 45.

Die in der Figur 2 wesentlich detaillierter dargestellte weitere Tragstruktur 107 eines Fahrzeugbeifahrersitzes 101 besteht aus einer Vielzahl an derartigen Strukturstreben 130, welche im Wesentlichen ein Sitzteil 102 und eine Rückenlehne (hier nicht eingezeichnet) tragen.

Ein Strukturstrebenbereich 131 der Tragstruktur 107 ist hier als eine Befestigungseinrichtung 124 (hier dunkler dargestellt) für ein Gurtschloss 105 eines hier nicht extra bezifferten Gurtrückhaltesystems des Fahrzeugbeifahrersitzes 101 ausgestaltet.

Zwischen dem Gurtschloss 105 und der Befestigungseinrichtung 124 ist eine Befestigungslasche 126 geschaltet, um die Entfernung zwischen einer bevorzugten Gurtschlossposition im Sitzbereich 113 und einem Strukturstrebenbereich zu überbrücken.

Die einzelnen Strukturstreben 130 sind in diesem weiteren Ausführungsbeispiel zum überwiegenden Teil zu einem asymmetrischen Gestell 131 der Tragstruktur 107 miteinander verschweißt und bestehen aus einem Edelstahlmaterial.

Mittels der Vielzahl an Strukturstreben 130 wird an der Tragstruktur 107 auch eine Hauptkräfte-Leiteinrichtung 132 mit im Wesentlichen drei Hauptkräftewirklinien 133, 134 und 135 gebildet, wobei die drei Hauptkräftewirklinien 133, 134 und 135 in einem Knotenbereich 136 der der Tragstruktur 107 bzw. der Hauptkräfte-Leiteinrichtung 132 zusammen geführt sind.

Der Knotenbereich 136 befindet sich in einem oberen Eckbereich 112 der Tragstruktur 107. In dem Knotenbereich 136 ist eine Gurtaufhängung 137 vorgesehen, an welcher eine Gurtumlenkeinrichtung 106 des Gurtrückhaltesystems befestigbar ist.

In diesem Ausführungsbeispiel wird die erste Hauptkräftewirklinie 133 im Wesentlichen von einer ersten Hauptkräftestrebe 138 realisiert, welche von dem Knotenbereich 136 bogenförmig zu einem vorderen Tragstrukturfuß 139 spannt.

Die erste Hauptkräftestrebe 138 ist als im Wesentlichen Druckstrebe ausgelegt, die zudem noch gebogen ausgeformt ist.

Insofern verläuft die erste Hauptkräftewirklinie 133 zumindest teilweise außerhalb der ersten Hauptkräftestrebe 138.

Die ersten Hauptkräftestrebe 138 ragt hierbei, insbesondere oberhalb des Sitzteils 102, bis vor die Rückenlehne in den Sitzbereich 113 des Fahrzeugbeifahrersitzes 101 bauchig hinein.

Vorteilhafter Weise ist die erste Hauptkräftestrebe 138 als vordere der Hauptkräftestreben 138, 140 und 142 in einer Seitenführungseinrichtung (hier nicht gezeigt) des Fahrzeugbeifahrersitzes 101 eingebettet.

Eine zweite gebogene Hauptkräftestrebe 140 formuliert die zweite Hauptkräftewirklinie 134, wobei die zweite Hauptkräftestrebe 140 von dem Knotenbereich 136 in Sitzrichtung gebogen bis zu einem ersten hinteren Tragstrukturfuß 141 reicht.

Die dritte Hauptkräftewirklinie 135 wird durch eine kombinierte dritte Hauptkräftestrebe 142 definiert, welche einen gebogenen Oberteil 143 und einen dreiecksförmigen Unterteil 144 umfasst.

Während der gebogene Oberteil 143 bis in den Knotenbereich 116 reicht, erstreckt sich der dreiecksförmige Unterteil 144 bis zu einem weiteren hinteren Strukturfuß 145.

Eine rückseitige Vertikalstrebe 156 des dreiecksförmigen Unterteils 144 erstreckt sich hochwärts, entgegen der Sitzrichtung bauchig gebogen, bis oberseitig 148 der Tragstruktur 107 hinein. Dort geht sie in eine horizontal verlaufende Strukturstrebe 157 über, die quer zur Sitzrichtung angeordnet ist. Knotenbereichsseitig biegt die horizontal verlaufende Strukturstrebe 157 in eine runterwärts gerichtete Strukturstrebe 158, die an dem Knotenbereich 116 in die zweite Hauptkräftestrebe 140 übergeht. Hierdurch ist rückseitig der Tragstruktur 107 eine außerordentlich gute Abstützung des Fahrzeugsitzes 101 gewährleistet.

Darüber hinaus weist der dreiecksförmige Unterteil 144 zur weiteren Stabilisierung eine vorderseitige Vertikalstrebe 159 auf, die von dem weiteren hinteren Tragstrukturfuß 145 hochwärts nach vorne ausgerichtet angeordnet ist und insbesondere eine gebogene Horizontalstrebe 160 der Dreiecks-Anordnung 144 trägt.

Da die Horizontalstrebe 160 auch von der rückseitigen Vertikalstrebe 156 getragen wird, baut auch eine Gurtschlossseite 161 des Fahrzeugsitzes 101 sehr stabil und dennoch leicht.

Der gebogene Oberteil 143 der dritten Hauptkräftestrebe 142 stützt sich so vorteilhaft auf der Horizontalstrebe 160 des dreiecksförmigen Unterteils 144 ab, welche wiederum sowohl von der rückseitigen Vertikalstrebe 156 als auch von der vorderseitigen Vertikalstrebe 159 getragen wird.

Die Horizontalstrebe 160 erstreckt sich vorteilhafter Weise zudem ausgehend von der rückseitigen Vertikalstrebe 156 bis zu einem weiteren vorderen Tragstrukturfuß 146 und stützt hierbei sogleich noch eine vertikale Stützstrebe 162 einer Sitzteilaufhängungsstrebe 163 der Tragstruktur 107 ab, welche oberseitig 148 an der rückseitigen Vertikalstrebe 156 befestigt ist und ebenfalls in dem weiteren vorderen Tragstrukturfuß 146 endet.

Von der Sitzteilaufhängungsstrebe 163 hochwärts erstreckt sich noch eine Kreuzstrebe 164 zur weiteren Abstützung eines Sitzteilrahmens 165, der in einem Knotenpunkt 166 gemeinsam mit der vorderseitigen Vertikalstrebe 159 an der Sitzteilaufhängungsstrebe 163 zusammentrifft.

Die Kreuzstrebe 164 stützt sich knotenbereichsseitig noch an der ersten Hauptkräftestrebe 138 ab.

Weiter hinten sind die zweite Hauptkräftestrebe 140 und die rückseitige Vertikalstrebe 156 stabilisierend noch durch eine untere Querverbindungsstrebe 167 miteinander verbunden.

Von dieser Querverbindungsstrebe 167 endseitig abgehend verlaufen noch Horizontalverbindungsstreben 168, die vorzugsweise als weitere Kreuzstrebe ausgestaltet sind, einerseits startend (hier verdeckt von dem Sitzteil 102) von der zweiten Hauptkräftestrebe 140 zu dem Sitzteilrahmen 165 und anderseits startend von der rückseitigen Vertikalstrebe 156 zu dem Sitzteilrahmen 165.

Die hier nicht gezeigte Rückenlehne wird mittels einer Ovalstrebe 169 und eine hier ebenfalls nicht gezeigte Kopfstütze wird mittels einer u-förmigen Strebenanordnung 170 an der Tragstruktur 107 gehalten.

Es versteht sich, dass die hier beschriebene Tragstruktur 107 im Bedarfsfall noch durch weitere Strukturstreben 130 ergänzt sein kann.

Der weitere vordere Tragstrukturfuß 146 liegt nicht auf einer der Hauptkräftewirklinien 133, 134 bzw. 135. Insofern spielt diese nur eine untergeordnete Rolle bei der Gesamtabstützung des Fahrzeugsitzes 101 gegenüber einer hier nicht gezeigten Karosseriekomponente.

Vielmehr wird die Hauptkräfte-Leiteinrichtung 132 im Wesentlichen durch ein Dreibein-Gestell 147 verkörpert, welches durch weitere Strukturstreben 130 der Tragstruktur 107 ergänzt ist.

Dadurch, dass die Hauptkräfte-Leiteinrichtung 132 derart ausgestaltet ist, dass die drei Hauptkräftewirklinien 133, 134 und 135 oberseitig 148 an der Tragstruktur 107 in dem gemeinsamen Knotenbereich 136 zusammenlaufen, kann die Tragstruktur 107 und insbesondere deren Hauptkräfte-Leiteinrichtung 132 sehr kompakt gebaut werden.

Dahingegen sind die drei Hauptkräftewirklinien 133, 134 und 135 unterseitig 149 an der Tragstruktur 107 weiter voneinander beabstandet als im Knotenbereich 136, so dass die an dem Fahrzeugsitz 101 auftretenden Hauptkräfte vorteilhafter Weise großflächig in die Karosseriekomponente eingeleitet werden können.

Die Hauptkräfte-Leiteinrichtung 132 kann gewichtsreduziert im Wesentlichen lediglich durch die erste Hauptkräftestrebe 138, die zweite Hauptkräftestrebe 140 und die dritte Hauptkräftestrebe 142 realisiert sein, so dass die Hauptkräfte-Leiteinrichtung 132 in diesem Ausführungsbeispiel im Wesentlichen durch das einfach konstruierte Dreibein-Gestell 147 bereitgestellt werden kann, welches trotz des einfachen und gewichtsmäßig leichten Aufbaus eine sehr stabile Tragstruktur 107 gewährleistet.

An dieser Stelle sei der Vollständigkeit halbe auch erwähnt, dass vorteilhafter Weise die Gurtaufhängung 137 an einem ersten Endbereich 150 der dritten Hauptkräftestrebe 142 und die Gurtschlossbefestigung 115 ist an einem dem ersten Endbereich 150 gegenüberliegen weiteren Endbereich 151 der dritten Hauptkräftestrebe 142 angeordnet.

Der erste Endbereich 150 befindet sich im Wesentlichen auf Höhe der Gurtaufhängung 137 und der weitere Endbereich 151 auf Höhe des weiteren hinteren Tragstrukturfußes 145.

Hierdurch können Gurtrückhaltekräfte 114 insbesondere auch an Eckbereichen 150 und 151 der Tragstruktur 107 bzw. der Hauptkräfte-Leiteinrichtung 132 angreifen, wodurch insbesondere die dritte Hauptkräftestrebe 142 in Gänze zur Aufnahme der Gurtrückhaltekräfte 114 zur Verfügung.

Die Gurtrückhaltekräfte 114 sind hier beispielhaft hinsichtlich eines schematisch dargestellten Gurtes 152 des hier nicht weiter bezifferten Gurtrückhaltesystems eingezeichnet.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

### Bezugszeichenliste

- 1: Fahrzeugsitz
- 2: Sitzteil
- 3: Rückenlehne
- 4: Gurtrückhaltesystem
- 5: Gurtschloss
- 6: Gurtumlenkeinrichtung
- 7: Tragstruktur
- 8: Karosseriekomponente
- 9: Kabinenboden
- 10: Blechkleid
- 11: oberes Drittel
- 12: Eckbereich
- 13: Sitzbereich
- 14: Gurtrückhaltekräfte
- 15: Befestigung
- 16: Befestigungsbereich
- 17: unteres Ende
- 18: Fußbereich
- 19: horizontale Kräfte
- 20: vertikale Kräfte
- 21: herkömmliche Höhe
- 22: neue Höhe
- 23: Vertikalebene
- 24: Befestigungseinrichtung
- 25: üblicher Befestigungspunkt
- 26: Befestigungslasche
- 30: Strukturstreben
- 42: dritte Hauptkräftestrebe
- 50: erster Endbereich
- 51: weiterer Endbereich

- 101: Fahrzeugbeifahrersitz
- 102: Sitzteil
- 105: Gurtschloss
- 106: Gurtumlenkeinrichtung
- 107: Tragstruktur
- 112: Eckbereich
- 113: Sitzbereich
- 114: Gurtrückhaltekräfte
- 130: Strukturstreben
- 131: asymmetrisches Gestell
- 132: Hauptkräfte-Leiteinrichtung
- 133: erste Hauptkräftewirklinie
- 134: zweite Hauptkräftewirklinie
- 135: dritte Hauptkräftewirklinie
- 136: Knotenbereich
- 137: Gurtaufhängung
- 138: erste Hauptkräftestrebe
- 139: vorderer Tragstrukturfuß
- 140: zweite Hauptkräftestrebe
- 141: erster hinterer Tragstrukturfuß
- 142: dritte Hauptkräftestrebe
- 143: Oberteil
- 144: Unterteil
- 145: weiterer hinterer Tragstrukturfuß
- 146: weiterer vorderer Tragstrukturfuß
- 147: Dreibein-Gestell
- 148: oberseitig
- 149: unterseitig
- 150: erster Endbereich
- 151: weiterer Endbereich
- 152: Gurt
- 156: rückseitige Vertikalstrebe
- 157: horizontale Strukturstrebe
- 158: Strukturstrebe
- 159: vorderseitige Vertikalstrebe
- 160: Horizontalstrebe
- 161: Gurtschlossseite
- 162: vertikale Stützstrebe
- 163: Sitzteilaufhängungsstrebe
- 164: Kreuzstrebe
- 165: Sitzteilrahmen
- 166: Knotenpunkt
- 167: Querverbindungsstrebe
- 168: Horizontalverbindungsstreben
- 169: Ovalstrebe
- 170: Strebenanordnung

## Patentansprüche

1. Fahrzeugsitz (1; 101) mit einem Sitzteil (2; 102), mit einer Rückenlehne (3; 103), mit einem Gurtrückhaltesystem (4) und mit einer Tragstruktur (7; 107) zum Tragen des Sitzteils (2; 102) sowie der Rückenlehne (3; 103), bei welchem das Gurtrückhaltesystem (4) eine Gurtumlenkung (6; 106) und ein Gurtschloss (5; 105) umfasst und bei welchem die Gurtumlenkung (6; 106) in einem oberen Eckbereich (12; 112) der Rückenlehne (3; 103) und das Gurtschloss (5; 105) in einem Sitzbereich (13; 113) des Sitzteils (2; 102) platziert ist,
**dadurch gekennzeichnet, dass**
die Tragstruktur (7; 107) ein asymmetrisches Gestell (131) mit im Wesentlichen vertikal verlaufenden Hauptkräftestreben (42; 138, 140, 142) aufweist, bei welchem die Hauptkräftestreben (42; 138, 140, 142) oberseitig (148) der Tragstruktur (7; 107) in einem Knotenbereich (16; 116) zusammengeführt und unterseitig (149) der Tragstruktur (7; 107) eine erste (138) der Hauptkräftestreben (42; 138, 140, 142) knotenbereichsseitig als Druckstrebe nach vorne bis zu einem vorderen Tragstrukturfuß (139), eine zweite (140) der Hauptkräftestreben (42; 138, 140, 142) als Zugstrebe knotenbereichsseitig hinten bis zu einem ersten hinteren Tragstrukturfuß (141) und eine dritte (42; 142) der Hauptkräftestreben (42; 138, 140, 142) als Zug-Druckstrebe hinten bis zu einem weiteren hinteren Tragstrukturfuß (45; 145) geführt angeordnet sind, wobei eine Befestigung (15; 115) des Gurtschlosses (5; 105) im unteren Drittel oder im unteren Viertel der dritten Hauptkräftestrebe (42; 142) angeordnet ist.

2. Fahrzeugsitz (1; 101) nach Anspruch 1,
**dadurch gekennzeichnet, dass**
die Gurtumlenkung (6; 106) an einem ersten Endbereich (50; 150) der dritten Hauptkräftestrebe (42; 142) und die Gurtschlossbefestigung (15; 115) an einem dem ersten Endbereich (50; 150) gegenüberliegen weiteren Endbereich (51; 151) der dritten Hauptkräftestrebe (42; 142) angeordnet sind.

3. Fahrzeugsitz (1; 101) nach Anspruch 1 oder 2,
**dadurch gekennzeichnet, dass**
die erste Hauptkräftestrebe (138), insbesondere oberhalb des Sitzteils (2; 102), bis vor die Rückenlehne (3; 103) reichend angeordnet ist und seitlich an oder neben dem Sitzteil (2; 102) angeordnet ist.

4. Fahrzeugsitz (1; 101) nach einem der Ansprüche 1 bis 3,
**dadurch gekennzeichnet, dass**
die erste Hauptkräftestrebe (138) gebogen und in Sitzrichtung bauchig ausgestaltet ist.

5. Fahrzeugsitz (1; 101) nach einem der Ansprüche 1 bis 4,
**dadurch gekennzeichnet, dass**
die zweite Hauptkräftestrebe (140) hinter dem Sitzteil (2; 102) angeordnet ist und in Sitzrichtung bauchig ausgestaltet ist und/oder dass die dritte Hauptkräftestrebe (42; 142) in Sitzrichtung gesehen quer hinter dem Sitzteil (2; 102) angeordnet ist.

6. Fahrzeugsitz (1; 101) nach einem der Ansprüche 1 bis 5,
**dadurch gekennzeichnet, dass**
die dritte Hauptkräftestrebe (42; 142) tragstrukturfußseitig an einer Dreiecks-Anordnung (144) aus weiteren Tragstrukturstreben (156, 159, 160) abgestützt angeordnet ist.

7. Fahrzeugsitz (1; 101) nach Anspruch 6,
**dadurch gekennzeichnet, dass**
eine rückseitige Vertikalstrebe (156) der Dreiecks-Anordnung (144) sich von dem weiteren hinteren Tragstrukturfuß (45; 145) bis zu dem Knotenbereich (16; 116) erstreckt und dort insbesondere in die zweite Hauptkräftestrebe (140) übergeht.

8. Fahrzeugsitz (1; 101) nach Anspruch 6 oder 7,
**dadurch gekennzeichnet, dass**
eine vorderseitige Vertikalstrebe (159) der Dreiecks-Anordnung (144) von dem weiteren hinteren Tragstrukturfuß (45; 145) hochwärts nach vorne ausgerichtet angeordnet ist und insbesondere eine Horizontalstrebe (160) der Dreiecks-Anordnung (144) trägt.

9. Fahrzeugsitz (1; 101) nach einem der Ansprüche 6 bis 8,
**dadurch gekennzeichnet, dass**
eine Horizontalstrebe (160) der Dreiecks-Anordnung (144) sich von einer rückseitigen Vertikalstrebe (156) der Dreiecks-Anordnung (144) bis zu einem weiteren vorderen Tragstrukturfuß (146) der Tragstruktur (7; 107) erstreckt.

## Claims

1. Vehicle seat (1; 101) comprising a seat part (2; 102), a backrest (3; 103), a belt restraining system (4) and a support structure (7; 107) for supporting the seat part (2; 102) and the backrest (3; 103), in which the belt restraining system (4) comprises a belt deflection means (6; 106) and a belt buckle (5; 105), and in which the belt deflection means (6; 106) is placed in an upper corner region (12; 112) of the backrest (3; 103) and the belt buckle (5; 105) is placed in a seat region (13; 113) of the seat part (2; 102),
**characterised in that**
the support structure (7; 107) comprises an asymmetrical frame (131) having main strengthening struts that extend substantially vertically (42; 138, 140, 142), in which frame the main strengthening struts (42; 138, 140, 142) are brought together in a junction region (16; 116) on the upper side (148) of the support structure (7; 107) and, on the lower side (149) of the support structure (7; 107), a first (138) of the main strengthening struts (42; 138, 140, 142) is arranged on the junction region side as a strut and is guided towards the front as far as a front support structure foot (139), a second (140) of the main strengthening struts (42; 138, 140, 142) is arranged on the junction region side as a tie and is guided towards the rear as far as a first rear support structure foot (141), and a third (42; 142) of the main strengthening struts (42; 138, 140, 142) is arranged as a tension strut guided towards the rear as far as a further rear support structure foot (45; 145), a fastening (15; 115) of the belt buckle (5; 105) being arranged in the lower third or in the lower quarter of the third main strengthening strut (42; 142).

2. Vehicle seat (1; 101) according to claim 1,
**characterised in that**
the belt deflection means (6; 106) is arranged at a first end region (50; 150) of the third main strengthening strut (42; 142) and the belt buckle fastening (15; 115) is arranged at a further end region (51; 151) of the third main strengthening strut (42; 142) opposite the first end region (50; 150).

3. Vehicle seat (1; 101) according to either claim 1 or claim 2,
**characterised in that**
the first main strengthening strut (138), in particular above the seat part (2; 102), is arranged so that it extends up to the backrest (3; 103) and is arranged laterally on or next to the seat part (2; 102).

4. Vehicle seat (1; 101) according to any of claims 1 to 3,
**characterised in that**
the first main strengthening strut (138) is curved and bulge-shaped in the sitting direction.

5. Vehicle seat (1; 101) according to any of claims 1 to 4,
**characterised in that**
the second main strengthening strut (140) is arranged behind the seat part (2; 102) and is bulge-shaped in the sitting direction and/or **in that** the third main strengthening strut (42; 142) is arranged transversely behind the seat part (2; 102) when viewed in the sitting direction.

6. Vehicle seat (1; 101) according to any of claims 1 to 5,
**characterised in that**
the third main strengthening strut (42; 142) is arranged so as to be supported, on the support structure foot side, on a triangular arrangement (144) made of further support structure struts (156, 159, 160).

7. Vehicle seat (1; 101) according to claim 6,
**characterised in that**
a vertical strut (156) at the back of the triangular arrangement (144) extends from the further rear support structure foot (45; 145) as far as the junction region (16; 116) and there in particular transitions into the second main strengthening strut (140).

8. Vehicle seat (1; 101) according to either claim 6 or claim 7,
**characterised in that**
a vertical strut (159) at the front of the triangular arrangement (144) is arranged so as to be oriented upwards towards the front from the further rear support structure foot (45; 145) and in particular supports a horizontal strut (160) of the triangular arrangement (144).

9. Vehicle seat (1; 101) according to any of claims 6 to 8,
**characterised in that**
a horizontal strut (160) of the triangular arrangement (144) extends from a vertical strut (156) at the back of the triangular arrangement (144) as far as a further front support structure foot (146) of the support structure (7; 107).

## Revendications

1. Siège de véhicule (1 ; 101) avec une partie d'assise (2 ; 102), avec un dossier (3; 103), avec un système de retenue de ceinture (4) et avec une structure porteuse (7; 107) pour le support de la partie d'assise (2 ; 102) et du dossier (3 ; 103), dans lequel le système de retenue de ceinture (4) comprend un renvoi de ceinture (6 ; 106) et un verrou de ceinture (5 ; 105) et dans lequel le renvoi de ceinture (6 ; 106) est placé dans un coin supérieur (12 ; 112) du dossier (3 ; 103) et le verrou de ceinture (5 ; 105) est placé dans une zone d'assise (13 ; 113) de la partie d'assise (2 ; 102),
**caractérisé en ce que**
la structure porteuse (7 ; 107) comprend un châssis asymétrique (131) avec des nervures de renfort principales (42 ; 138, 140, 142) qui s'étendent principalement au sens vertical, les nervures de renfort principales (42 ; 138, 140, 142) étant regroupées sur le côté supérieur (148) de la structure porteuse (7 ; 107) dans une zone nodale (16; 116) et sur le côté inférieur (149) de la structure porteuse (7; 107), sont disposées, de lanière guidée, une première (138) des nervures de renfort principales (42 ; 138, 140, 142), du côté de la zone nodale en tant que nervure de pression de l'avant vers un pied avant de la structure porteuse (139), une deuxième (140) des nervures de renfort principales (42 ; 138, 140, 142), en tant que nervure de traction, sur le côté de la zone nodale, à l'arrière jusqu'à un premier pied arrière de la structure porteuse (141) et une troisième (42 ; 142) des nervures de renfort principales (42 ; 138, 140, 142), en tant que nervure de traction-pression, à l'arrière jusqu'à un autre pied arrière de la structure porteuse (45 ; 145), une fixation (15 ; 115) du verrou de ceinture (5 ; 105) étant disposé dans le tiers inférieur ou dans le quart inférieur de la troisième nervure de renfort principale (42 ; 142).

2. Siège de véhicule (1 ; 101) selon la revendication 1, **caractérisé en ce que** le renvoi de ceinture (6 ; 106) est disposé au niveau d'une première zone d'extrémité (50 ; 150) de la troisième nervure de renfort principale (42 ; 142) et la fixation du verrou de ceinture (15 ; 115) est disposé au niveau d'une autre zone d'extrémité (51 ; 151) de la troisième nervure de renfort principale (42 ; 142), opposée à la première zone d'extrémité (50; 150).

3. Siège de véhicule (1 ; 101) selon la revendication 1 ou 2, **caractérisé en ce que** la première nervure de renfort principale (138) est disposée, plus particulièrement au-dessus de la partie d'assise (2 ; 102), jusque devant le dossier (3 ; 103) et est disposé latéralement au niveau ou à proximité de la partie d'assise (2 ; 102).

4. Siège de véhicule (1 ; 101) selon l'une des revendications 1 à 3, **caractérisé en ce que** la première nervure de renfort principale (138) est pliée et est conçue de manière bombée dans la direction d'assise.

5. Siège de véhicule (1 ; 101) selon l'une des revendications 1 à 4, **caractérisé en ce que** la deuxième nervure de renfort principale (140) se trouve derrière la partie d'assise (2 ; 102) et est conçue de manière bombée dans la direction d'assise et/ou **en ce que** la troisième nervure de renfort principale (42 ; 142) est disposée, vue dans la direction d'assise, transversalement derrière la partie d'assise (2 ; 102).

6. Siège de véhicule (1 ; 101) selon l'une des revendications 1 à 5, **caractérisé en ce que** la troisième nervure de renfort principale (42 ; 142) est disposée de façon à s'appuyer, du côté du pied de la structure porteuse, contre un dispositif triangulaire (144) constitué d'autres nervures de structure porteuse (156, 159, 160).

7. Siège de véhicule (1 ; 101) selon la revendication 6, **caractérisé en ce que** la nervure verticale arrière (156) du dispositif triangulaire (144) s'étend de l'autre pied arrière de la structure porteuse (45; 145) jusqu'à la zone nodale (16; 116) et y effectue une transition, plus particulièrement, avec la deuxième nervure de renfort principale (140).

8. Siège de véhicule (1 ; 101) selon la revendication 6 ou 7, **caractérisé en ce qu'**une nervure verticale avant (159) du dispositif triangulaire (144) est disposée de manière orientée de l'autre pied arrière de la structure porteuse (45 ; 145) vers le haut vers l'avant et, plus particulièrement, supporte une nervure horizontale (160) du dispositif triangulaire (144).

9. Siège de véhicule (1 ; 101) selon l'une des revendications 6 à 8, **caractérisé en ce qu'**une nervure horizontale (160) du dispositif triangulaire (144) s'étend d'une nervure verticale arrière (156) du dispositif triangulaire (144) jusqu'à un autre pied avant (146) de la structure porteuse (7 ; 107).
